**Europäisches Patentamt**

**European Patent Office**

**Office européen des brevets**

(19)

(11) Numéro de publication : **0 362 038 B1**

(12)

# FASCICULE DE BREVET EUROPEEN

(45) Date de publication du fascicule du brevet :
**19.11.92 Bulletin 92/47**

(51) Int. Cl.$^5$ : **F16F 9/02, A47C 3/30**

(21) Numéro de dépôt : **89402612.9**

(22) Date de dépôt : **25.09.89**

(54) **Dispositif de commande pour ressort à gaz blocable.**

(30) Priorité : **30.09.88 FR 8812797**

(43) Date de publication de la demande :
**04.04.90 Bulletin 90/14**

(45) Mention de la délivrance du brevet :
**19.11.92 Bulletin 92/47**

(84) Etats contractants désignés :
**AT BE CH DE ES FR GB IT LI LU NL SE**

(56) Documents cités :
**EP-A- 0 050 465**
**CH-A- 619 604**
**DE-A- 3 325 798**
**DE-U- 1 955 308**

(56) Documents cités :
**DE-U- 6 910 925**
**FR-A- 1 502 431**
**FR-A- 2 350 075**
**FR-A- 2 461 851**
**FR-A- 2 488 499**

(73) Titulaire : **AIRAX**
**Z.I. Besançon-Chemaudin**
**F-25320 Montferrand-Le-Chateau (FR)**

(72) Inventeur : **Dony, Dominique**
**Braillans**
**F-25640 Roulans (FR)**

(74) Mandataire : **Colas, Jean-Pierre et al**
**Cabinet de Boisse 37, avenue Franklin D.**
**Roosevelt**
**F-75008 Paris (FR)**

EP 0 362 038 B1

Jouve, 18, rue Saint-Denis, 75001 PARIS

# Description

La présente invention est relative à un dispositif de commande pour ressort à gaz blocable.

Les ressorts à gaz de type blocable sont utilisés sur de nombreux dispositifs (lits, fauteuils, béquilles, etc...) pour assurer un réglage continu, l'équilibrage d'une masse, une régulation de vitesse ; ces trois fonctions se font ensemble ou séparément. Ils sont munis d'un doigt de commande situé à l'une de leurs extrémités (côté tige ou côté tube). Ce doigt doit être déplacé axialement de quelques millimètres, le retour se faisant automatiquement ; le déplacement se fait toujours en direction du piston du ressort à gaz. Le ressort à gaz est le plus souvent monté entre un point fixe et un point mobile pivotant, ce qui pose un problème pour assurer cette commande. En effet, le ressort à gaz lors de sa manoeuvre pivote autour de son point fixe du fait que le point mobile décrit un arc de cercle, il faut donc prévoir un dispositif de commande adapté à ce pivotement.

On a proposé, dans FR-A-2.461.851 d'utiliser une lame élastique, en forme de U, dont une branche est solidaire du ressort à gaz et l'autre branche vient en appui sur la tête du doigt de commande. Un ensemble à câble est prévu pour déplacer cette branche de la lame. Ce système est compliqué et très coûteux.

Dans certains systèmes, cf DE-U-1.955.308, un levier d'actionnement est articulé sur un pivot perpendiculaire à l'axe du ressort à gaz, et écarté de cet axe. Lorsque le levier pivote, son extrémité vient déplacer la tête du doigt de commande. Ce système a l'inconvénient d'être relativement coûteux à cause de la présence d'un pivot, et d'un support, relié au ressort à gaz, pour ce pivot.

On a proposé, dans DE-U-69 10925, un dispositif dans lequel le doigt d'un dispositif de verrouillage est actionné par un levier dont l'articulation est simplement constituée par un trou qui traverse une pièce tubulaire qui entoure le doigt. Cependant, des pièces annexes sont encore nécessaire pour empêcher un déplacement non désiré du levier.

On a proposé, dans EP-A-0050465, un autre dispositif dans lequel le doigt du dispositif de verrouillage est actionné par un levier dont l'articulation est aussi constituée par un trou qui traverse une pièce tubulaire qui entoure le doigt. Le levier présente au moins une encoche à section trapézoïdale dans laquelle pénètre le doigt ou le bord du trou qui est à l'opposé du ressort à gaz. Un moyen élastique, qui peut être la pression interne du ressort à gaz agissant sur le doigt, ou un ressort métallique, pousse le doigt, ou le bord du trou, dans le fond de l'encoche, pour maintenir le levier en place dans le sens perpendiculaire à l'axe du ressort à gaz. Pour enlever le levier, il suffit d'exercer sur lui, parallèlement à sa direction, un effort suffisant pour faire sortir le doigt, ou le bord du trou, de l'encoche trapézoïdale. On conçoit qu'un effort non volontaire, ou un choc, peuvent entraîner un départ non désiré du levier, qui risque alors d'être perdu, rendant le dispositif inutilisable.

Le but de l'invention est de fournir un dispositif du type qu'on vient d'indiquer et qui présente une sécurité parfaite, en empêchant un départ non désiré du levier d'actionnement.

Pour obtenir ce résultat, l'invention fournit un dispositif de commande pour ressort à gaz blocable, comprenant :

- un embout tubulaire conçu pour être fixé sur un embout de fixation qui est prévu à l'extrémité du corps ou de la tige d'un ressort à gaz blocable, ou qui constitue un prolongement d'une paroi du ressort blocable, cet embout de fixation étant traversé axialement par un doigt de commande coulissant dont une tête fait saillie à l'extérieur de l'embout de fixation, ledit embout tubulaire présentant deux fenêtres diamétralement opposées et allongées axialement,
- un levier d'actionnement qui s'engage dans lesdites fenêtres de l'embout tubulaire, ce levier d'actionnement comprenant une partie élargie destinée à venir en contact avec la tête du doigt de commande, cette partie élargie étant encadrée par deux parties de plus petite section destinées à pénétrer chacune dans une desdites fenêtres et à prendre appui sur le bord opposé au ressort à gaz de ladite fenêtre, et ladite partie élargie pouvant traverser au moins une des fenêtres,

et des moyens élastiques, capables, après montage de l'embout sur le ressort à gaz, de pousser le levier d'actionnement en appui simultané contre les deux bords opposés au ressort à gaz des fenêtres, le levier d'actionnement pouvant déplacer le doigt de commande en basculant autour du bord d'une fenêtre, en opposition à la force desdits moyens élastiques,

ce dispositif ayant pour particularité qu'au moins dans leur portion opposée au ressort à gaz, les fenêtres ont une section telle que, tout en pouvant recevoir la partie de plus petite section correspondante, elle ne permet pas le passage de la partie élargie du levier d'actionnement,

- que l'une des fenêtres a, seulement dans sa portion la plus proche du ressort à gaz, une section plus large, cette section permettant le passage de la partie élargie du levier d'actionnement,

et qu'il est prévu des moyens qui, après montage de l'embout sur le ressort à gaz, empêchent la partie élargie du levier de pénétrer dans ladite portion de plus large section de la fenêtre.

De préférence, pour des raisons de facilité de fabrication les deux fenêtres sont de forme identique.

De préférence aussi il est prévu des moyens élastiques qui poussent le levier en l'écartant du ressort à gaz pour maintenir lesdites parties de plus faible section du levier dans les portions de plus faible section des fenêtres.

Avantageusement, lesdits moyens élastiques sont constitués par la pression interne du ressort à gaz, qui tend à pousser le doigt de commande vers l'extérieur.

Suivant un mode de réalisation simple, les moyens pour empêcher la partie élargie du levier de pénétrer dans la portion élargie de la fenêtre ou des fenêtres sont constitués par l'extrémité de l'embout de fixation du ressort à gaz.

De préférence, l'embout tubulaire porte une pièce d'appui qui présente un moyen d'arrêt de la gaine d'une commande à câble gainé, cependant que le levier comporte des moyens pour la fixation du câble de ladite commande, ces moyens étant espacés de la partie élargie et des parties de petite section dudit levier.

L'invention va maintenant être exposée plus en détail à l'aide d'exemples pratiques de réalisation, illustrés avec les dessins, parmi lesquels :

Figure 1 est une vue en coupe d'un dispositif selon l'invention à commande directe associé à l'extrémité du corps d'un ressort à gaz.

Figure 2 est une coupe analogue d'un dispositif associé à la tige d'un ressort à gaz.

Figure 3 est une vue selon la flèche III de la figure 1.

Figure 4 est une vue analogue à la figure 1, mais avec une commande par câble.

Figure 5 est une vue en coupe, analogue à celle des figures 1, 2 et 4 de l'embout, dans une autre forme d'exécution.

Figure 6 est une vue, analogue à la figure 3, de l'embout de la figure 5.

Figures 7, 8 et 9 sont des vues de dessus, de côté et en coupe transversale du levier à l'endroit de la fixation du câble.

Figure 10 est une vue en coupe selon la ligne XX de la figure 1.

Figure 11 est une vue partielle en élévation du dispositif selon l'invention, prise selon l'axe du levier.

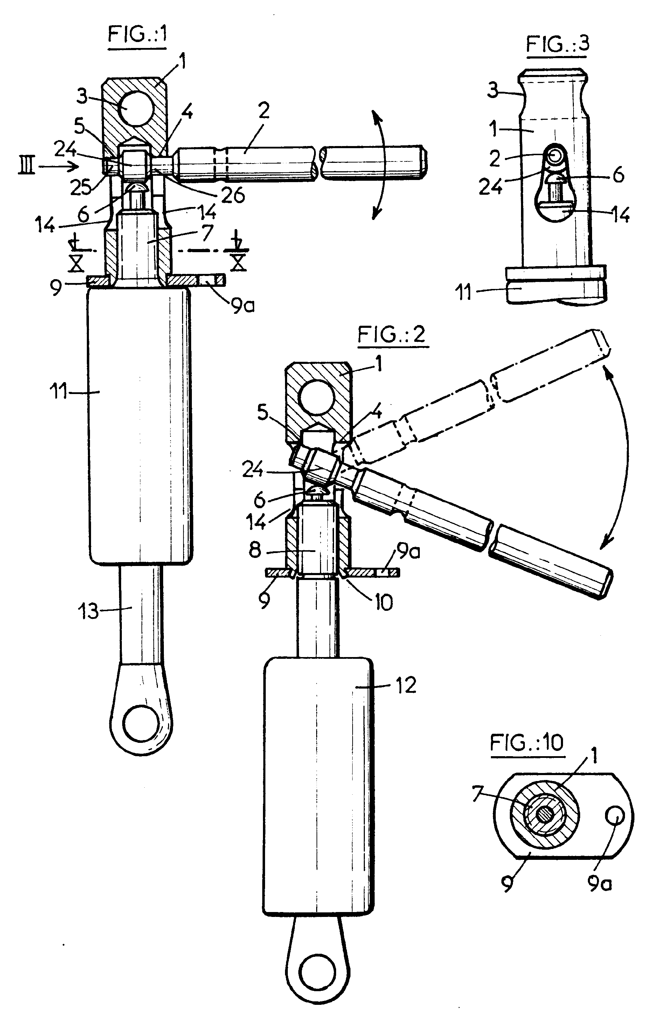

Les figures 1 et 2 montrent un embout combiné 1 en coupe longitudinale monté sur un ressort à gaz blocable.

Sur la figure 1, l'embout combiné 1 est vissé sur l'embout fileté 7 d'un ressort à gaz blocable 11 dont la commande est située côté fond de tube (à l'opposé de la tige). Le levier de commande 2 est en position neutre, il est maintenu sur les appuis 4 et 5 par le doigt de commande 6 du ressort à gaz blocable. Une plaque 9 munie d'un trou 9a prévu pour un arrêt de gaine 18 est fixée à la base de l'embout combiné 1. Le doigt de commande 6 est légèrement précontraint par une partie élargie 24 du levier de commande 2, située entre deux parties plus minces 25, 26 correspondant aux appuis 4 et 5. L'embout combiné 1 comporte un trou débouchant 3 percé radialement permettant la fixation du ressort à gaz sur un axe.

Sur la figure 2, l'embout combiné 1 est vissé sur la tige 8 d'un ressort à gaz blocable 12 dont le doigt de commande 6 est situé à l'extrémité de cette tige. Le levier 2 est actionné, le doigt de commande est enfoncé par la partie élargie 24. Le levier prend appui sur le point 5 de l'embout lorsqu'il est poussé, et sur le point 4 lorsqu'il est tiré.

La plaque 9 est fixée par sertissage sur la base de l'embout combiné 1. La partie élargie 24 du levier 2 a une double fonction : elle sollicite le doigt de commande 6 et, elle retient prisonnier le levier 2 dans l'embout combiné 1 tout en permettant le débattement nécessaire pour la manoeuvre.

Dans la figure 3, la fente 14 réalisée en forme de boutonnière rétrécie en haut est percée radialement de part en part dans l'embout combiné 1. La partie élargie 24 du levier 2 passe par la boutonnière, les deux sections réduites 25 et 26 de ce levier coulissent dans la fente correspondante de la partie haute de cette boutonnière.

On aperçoit, sur la figure 3, le sommet de l'embout fileté 7 à travers la fente 14. On comprend que la position relative de ce sommet et des portions élargies des fentes est calculée pour empêcher la partie élargie 24 d'atteindre ces portions élargies des fentes, et que lorsqu'on dévisse l'embout combiné 1 fixé sur l'embout fileté 7, on libère le levier, dont la partie élargie traverse alors la fente sans difficulté.

Les leviers 2 ou 15 sont donc mis en place dans l'embout combiné 1 avant montage de cet embout sur le ressort à gaz blocable 11 ou 12.

La figure 10 montre une section transversale de l'embout combiné 1.

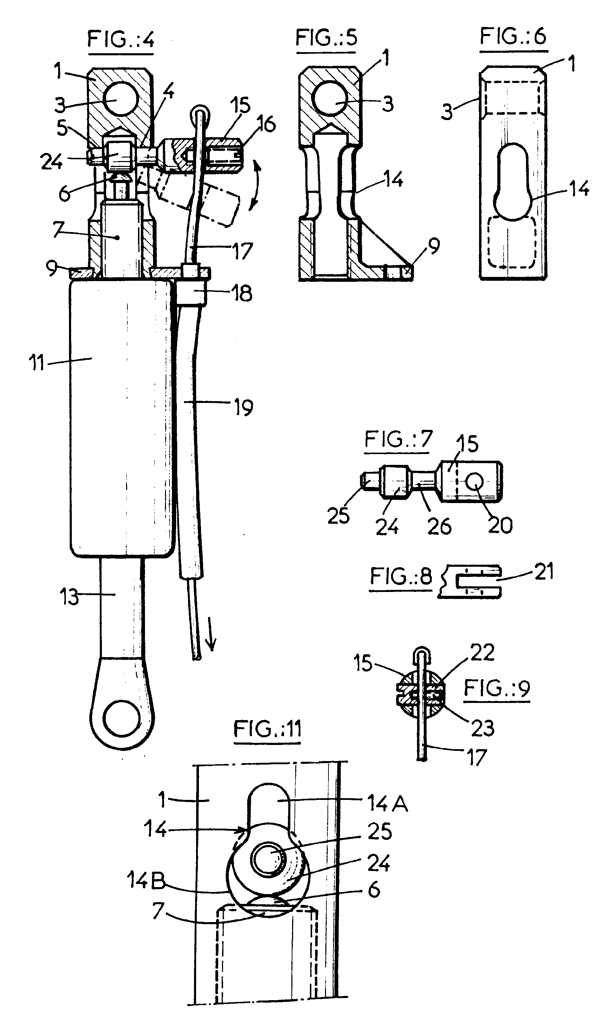

La figure 4 montre une section longitudinale de l'embout combiné 1 équipé d'un levier 15 permettant la commande à distance au moyen d'un câble souple 17 et d'une gaine 19.

Le levier 15 est muni d'un moyen pour bloquer le câble, ici le câble passe dans un trou radial, une vis 16 montée axialement dans un trou sécant vient immobiliser ce câble.

Les figures 7 à 9 montrent une autre forme de blocage du câble : un tourillon 22 muni d'une vis 23 bloque le câble 17. Ce tourillon est monté libre dans le trou 20 du levier 15, le câble passe à travers la fente 21 et immobilise transversalement le tourillon. Ce montage est connu dans les cycles pour la commande de freins.

Les figures 5 et 6 montrent une autre réalisation de l'embout combiné par moulage.

Sur la figure 11 un embout combiné 1, pourvu d'un filetage femelle, est vissé sur un embout fileté 7, qui prolonge un ressort à gaz non représenté. Une fente 14 traverse l'embout combiné 1. Elle comporte une portion de faible section transversale 14A, située du côté opposé à l'embout fileté 7, et une portion élargie 14B, plus proche de l'embout 7. La largeur de la portion amincie 14A est légèrement supérieure d'une section mince 25 du levier de commande, et la partie élargie 14B a une section légèrement supérieure au diamètre de la partie élargie 24 du même levier.

Dans la position représentée, le levier est forcé en direction de l'embout 7, et il vient buter sur celui-ci par l'intermédiaire du doigt de commande 6, qui est lui-même en position d'enfoncement maximal. Sur la figure, on aperçoit l'extrémité de l'embout 7 et du doigt de commande 6, et on constate que la partie élargie 24 du levier se trouve en partie au droit de la portion amincie 14A de la fente, si bien que le levier ne peut pas passer à travers la fente. On constate aisément que, après dévissage relatif de l'embout combiné 1 et de l'embout fileté 7 sur une longueur suffisante, la partie élargie 25 du levier pourra se trouver entièrement en face de la portion élargie 14B de la fente et que le levier pourra alors être extrait.

Pour le montage, on met d'abord en place le levier dans l'embout combiné en le faisant passer à travers les fenêtres 14, après quoi on visse l'embout combiné 1 et l'embout fileté 7 l'un sur l'autre. Le levier est alors bloqué et ne peut s'échapper.

L'embout combiné 1 peut être réalisé sous différentes formes sans modifier l'originalité de l'invention :

    a) le moyen de fixation 3 qui est un trou radial peut être soit une rotule, soit un filetage, soit une pince, soit une queue cylindrique, conique etc,

    b) le moyen de fixation sur le ressort à gaz est le plus souvent un filetage, il peut aussi se fixer soit par sertissage, soit par pincement, soit par goupillage etc,

    c) la plaque d'arrêt de la gaine 9 peut être solidaire de l'embout combiné 1, (figure 5) ou rapportée (figure 1) ; elle peut être amovible et mise en place au choix.

L'invention apporte aux utilisateurs de ressort à gaz blocable, un moyen simple et peu coûteux pour réaliser une commande soit directe soit à distance avec un nombre de pièces réduit, le levier peut être actionné soit en poussant, soit en tirant, l'effort de commande est réduit grâce au rapport des bras de levier.

Lors d'une commande à distance par câble, si les frottements entre le câble et la gaine sont importants, on peut ajouter entre la plaque d'arrêt de la gaine et le levier de manoeuvre un ressort de compression favorisant le retour à la position initiale.

En conclusion l'invention apporte les avantages suivants :

- Le levier se monte dans l'embout avant montage de l'embout sur le ressort à gaz.
- Le levier est prisonnier radialement dans l'embout lorsqu'il se trouve dans la portion étroite 14A de la fente 14.
- Le levier est prisonnier axialement et radialement dans l'embout, lorsque l'embout est monté sur le ressort à gaz.
- La forme particulière de la fente 14 réalisée au travers de l'embout permet au levier d'être manoeuvrable aussi bien en poussant qu'en tirant dans un plan passant par l'axe du ressort à gaz.
- Le levier peut se déplacer librement dans la portion étroite 14A de la fente 14 afin d'assurer la manoeuvre axiale du doigt de commande.
- Le levier peut être manoeuvré soit directement, soit par un câble souple coulissant dans une gaine, cette gaine prenant appui sur une forme solidaire de l'embout.
- L'embout et le levier sont de réalisation très simple, avec des moyens courants.
- L'embout peut être adapté très facilement sur des montages existants par différents procédés (trous, axe, rotule,filetage, taraudage, queue cylindrique etc).

## Revendications

1. Dispositif de commande pour ressort à gaz blocable, comprenant :

    - un embout tubulaire (1) conçu pour être fixé sur un embout de fixation (7) qui est prévu à l'extrémité du corps ou de la tige d'un ressort à gaz blocable (11, 12), ou qui constitue un prolongement d'une paroi du ressort blocable, cet embout de fixation (7) étant traversé axialement par un doigt de commande coulissant (6) dont une tête fait saillie à l'extérieur de l'embout de fixation (7), ledit embout tubulaire (1) présentant deux fenêtres (14) diamétralement opposées et allongées axialement,

    - un levier d'actionnement (2, 15) qui s'engage dans lesdites fenêtres (14) de l'embout tubulaire (1), ce levier d'actionnement (2, 15) comprenant une partie élargie (24) destinée à venir en contact avec la tête du doigt de commande (6), cette partie élargie (24) étant encadrée par deux parties de plus petite section (25, 26) destinées à pénétrer chacune dans une desdites fenêtres (14) et à prendre appui sur le bord opposé au ressort à gaz de ladite fenêtre (14), et ladite partie élargie (24) pouvant traverser au moins une des fenêtres (14),

       et des moyens élastiques (6), capables, après montage de l'embout sur le ressort à gaz, de pousser le levier d'actionnement (2, 15) en appui simultané contre les deux bords opposés au ressort à gaz des fenêtres (14), le levier d'actionnement pouvant déplacer le doigt de commande (6) en basculant autour du bord d'une fenêtre, en opposition à la force desdits moyens élastiques,

       caractérisé en ce que, au moins dans leur portion opposée au ressort à gaz, les fenêtres (14) ont une section telle que, tout en pouvant recevoir la partie de plus petite section (25, 26) correspondante, elle ne permet pas le passage de la partie élargie (24) du levier d'actionnement (2, 15),
- en ce que l'une des fenêtres (14) a, seulement dans sa portion la plus proche du ressort à gaz, une section plus large, cette section permettant le passage de la partie élargie (24) du levier d'actionnement (2, 15),
et en ce qu'il est prévu des moyens qui, après montage de l'embout sur le ressort à gaz, empêchent la partie élargie du levier de pénétrer dans ladite portion de plus large section de la fenêtre.

2. Dispositif selon la revendication 1, caractérisé en ce que les deux fenêtres (14) sont de forme identique.

3. Dispositif selon la revendication 2, caractérisé en ce que lesdits moyens élastiques sont constitués par la pression interne du ressort à gaz, qui tend à pousser le doigt de commande vers l'extérieur.

4. Dispositif selon l'une des revendications 1 à 3 caractérisé en ce que les moyens pour empêcher la partie élargie du levier de pénétrer dans la portion élargie de la fenêtre ou des fenêtres sont constitués par l'extrémité de l'embout de fixation (7) du ressort à gaz, et/ou le doigt de commande (6) dans sa position d'enfoncement maximal.

5. Dispositif selon l'une des revendications 1 à 4, caractérisé en ce que l'embout tubulaire porte une pièce d'appui (9) qui présente un moyen d'arrêt de la gaine d'une commande à câble gainé, cependant que le levier comporte des moyens (16; 20 à 23) pour la fixation du câble de ladite commande, ces moyens étant espacés de la partie élargie et des parties de petite section dudit levier.

## Patentansprüche

1. Steuervorrichtung für sperrbare Gasfeder mit:
- einem rohrförmigen Ansatzstück (1), das an einem Befestigungs-Ansatzstück (7) anbringbar ist, das an dem Ende des Körpers oder der Stange einer sperrbaren Gasfeder (11, 12) vorgesehen ist oder das eine Verlängerung einer Wand der sperrbaren Feder bildet, wobei das Befestigungs-Ansatzstück (7) axial von einem gleitenden Steuerfinger (6) durchquert wird, dessen Kopf aus dem Befestigungs-Ansatzstück (7) vorsteht, wobei das rohrförmige Ansatzstück (1) zwei Fenster (4) aufweist, die diametral gegenüberliegen und in axialer Richtung länglich sind,
- einem Betätigungshebel (2, 15), der in die Fenster (14) des rohrförmigen Ansatzstückes (1) greift, wobei der Betätigungshebel (2, 15) einen größeren Abschnitt (24) aufweist, der mit dem Kopf des Steuerfingers (6) in Anlage bringbar ist, wobei dieser größere Abschnitt (24) von zwei Abschnitten kleineren Querschnittes (25, 26) eingerahmt ist, die jeweils in eines der Fenster (14) vorstehen und an dem der Gasfeder gegenüberliegenden Rand dieses Fensters (14) anliegen und der größere Abschnitt (24) mindestens durch eines der Fenster (14) hindurchtreten kann,
und elastischen Mitteln (6), die nach der Montage des Ansatzstückes an der Gasfeder den Betätigungshebel (2, 15) gleichzeitig gegen die der Gasfeder gegenüberliegenden beiden Rändern der Fenster (14) andrücken können, wobei der Betätigungshebel den Steuerfinger (6) durch Kippen um den Rand eines Fensters entgegen der Kraft der elastischen Mittel verschieben kann,
dadurch gekennzeichnet, daß die Fenster (14) mindestens in ihrem der Gasfeder gegenüberliegenden Abschnitt einen solchen Querschnitt haben, daß er den Durchtritt des größeren Abschnittes (24) des Betätigungshebels (2, 15) nicht zuläßt, während er den entsprechenden Abschnitt kleineren Querschnittes (25, 26) aufnehmen kann,
- daß das eine der Fenster (14) allein in seinem der Gasfeder nächsten Abschnitt einen größeren Querschnitt hat, wobei dieser Querschnitt den Durchtritt des größeren Abschnittes (24) des Betätigungshebels (2, 15) erlaubt,
und daß Mittel vorgesehen sind, die nach der Montage des Ansatzstückes der Gasfeder den größeren Abschnitt des Hebels daran hindern, in den Fensterabschnitt größeren Querschnittes einzudringen.

2. Vorrichtung nach Anspruch 1, dadurch gekennzeichnet, daß die beiden Fenster (14) gleiche Form haben.

3. Vorrichtung nach Anspruch 2, dadurch gekennzeichnet, daß die elastischen Mittel von dem Innendruck der Gasfeder gebildet werden, der den Steuerfinger nach außen zu drücken sucht.

4. Vorrichtung nach einem der Ansprüche 1 bis 3, dadurch gekennzeichnet, daß die Mittel, die verhindern, daß der größere Abschnitt des Hebels in den größeren Abschnitt des Fensters oder der Fenster eindringt von dem Ende des Befestigungs-Ansatzstückes (7) der Gasfeder und/oder dem Steuerfinger (6) in seiner maximal eingefahrenen Position gebildet werden.

5. Vorrichtung nach einem der Ansprüche 1 bis 4, dadurch gekennzeichnet, daß das rohrförmige Ansatzstück ein Anlageteil (9) trägt, das ein Reaktionsmittel für die Hülse eines Bowdenzuges aufweist, während der Hebel Mittel (16; 20 bis 23) zur Befestigung des Kabels dieses Bowdenzugs aufweist, wobei diese Mittel von dem größeren Abschnitt und den Abschnitten kleineren Querschnittes des Hebels beabstandet sind.

## Claims

1. Control device for a lockable gas spring comprising:
   - a tabular connector (1) which is designed so as to be fixed onto a fixing connector (7) provided at the end of the enclosure or the rod of the gas spring, or which is a projection of a wall of the lockable gas spring, and through which a sliding control finger (6) whose head projects outside the fixing connector (7) passes axially, two diametrically opposed windows (14) being provided in the said tubular connector (1),
   - an actuating lever (2, 15) which engages into the said windows (14) of the tubular connector (1), the said actuating lever (2, 15) having a wide part (24) which is designed to bear against the head of the said control finger (6), the said wide part (24) being located between two thinner parts (25, 26) each intended to enter into one of the said windows (14) and to engage on the edge of the said window (14) which is opposite the gas spring, and the said wide part (24) being able to pass through at least one of the said windows (14)
   - and resilient means (6) which, after the connector has been mounted onto the gas spring, are able to press the actuating lever (2, 15) so as to abut simultaneously against both edges of the windows (14) which are opposite the gas spring, the said actuating lever being able to displace the control finger (6) by pivoting around an edge of a window, opposing the force of the said resilient means,
   characterized in that, at least in their part which is opposite the gas spring, the windows (14) have such a cross-section that, while being able to receive the corresponding thinner part (25, 26), it does not allow the wide part (24) of the actuating lever (2, 15) to pass through it

   - in that one of the windows (14) has, only in its section nearest the gas spring a larger cross-section, this cross-section allowing the wide part (24) of the actuating lever (2, 15) to pass through it,
   and in that means are provided which, after mounting the connector on the gas spring, prevent the said wide part of the said lever from entering the said window section with a larger cross-section.

2. Device according to claim 1, characterized in that the two windows are identical.

3. Device according to claim 2, characterized in that the said resilient means consist of the internal pressure of the gas spring, which tends to push the control finger outwards.

4. Device according to anyone of claims 1 to 3, characterized in that the said means for preventing the wide part of the lever entering the wide part of the window or windows consist of the end of the fixing connector (7) of the gas spring, and/or the control finger (6) in its position of maximum depression.

5. Device according to anyone of claims 1 to 4, characterized in that the tubular connector includes a bearing component (9) which has a sheath stopping means for a control system using a sheathed cable, while the lever has means (16, 20-23) for fastening the cable of the said control system, these means being spaced from the wide part of the said lever and from the thinner parts of the said lever.

FIG.:1

FIG.:3

FIG.:2

FIG.:10

FIG.:4

1
3
4
5
24
6
15
16
7
17
9
18
11
19
13

FIG.:5

1
3
14
9

FIG.:6

1
3
14

FIG.:7

15
25
24
26
20

FIG.:8

21

FIG.:9

15
22
23
17

FIG.:11

1
14 A
14
25
14 B
24
6
7